# EUROPEAN PATENT SPECIFICATION

(11) **EP 1 629 722 B1**
(45) Date of publication and mention of the grant of the patent: **30.12.2009**
(21) Application number: 05102859.5
(22) Date of filing: 12.04.2005
(51) Int. Cl.: A23L 1/0524, A23L 1/0532, A23L 2/06, A23C 9/13, A23G 3/00

(54) **Pourable composition comprising tasty gelled beads dispersed in a continuous aqueous phase**
Giessbare Zusammensetzung enthaltend schmackhafte gelierte Kügelchen in einer wässrigen Phase
Composition coulable comprenant des billes gélifiées savoureuses dispersées dans une phase continue aqueuse

(30) Priority: 24.08.2004 EP 04077392
(43) Date of publication of application: 01.03.2006
(73) Proprietor: CSM Nederland B.V., 1112 XE Diemen (NL)
(72) Inventor: Van der Heijden, Mario Theodorus Alfons, 4823 MZ Breda (NL); Bontes, Angelina, 4874 ND Etten-Leur (NL)
(74) Representative: van Westenbrugge, Andries

(56) References cited:
- US-A- 3 892 870
- US-A- 4 507 327
- US-A- 5 139 783
- US-B1- 6 436 461

## Description

### TECHNICAL FIELD OF THE INVENTION

The present invention concerns a pourable composition that can suitably be in the manufacture of a foodstuff, a fruit preparation or a beverage. More particularly, the invention is concerned with a pourable composition comprising a plurality of tasty gelled beads dispersed in a continuous aqueous phase, said gelled beads exhibiting a volume weighted average diameter in the range of 1-15 mm.

Other aspects of the invention relate to the use of the aforementioned pourable composition in the manufacture of a foodstuff, a fruit preparation or a beverage, and to a process of manufacturing said pourable composition.

### BACKGROUND OF THE INVENTION

It is well-known in the art of food preparation to incorporate discrete chunks of tasty food material such as fruit, raisins or chocolate into foodstuffs so as to enhance their appeal. The preparation of these tasty chunks is often laborious, especially in the case of fruit chunks (skinning, destoning, cutting). Also, it is usually difficult to control the addition of such tasty chunks to a food product base, especially if size, density and shape of the chunks vary widely. Furthermore, the use of e.g. genuine fruit chunks is not economical.

Another problem associated with the use of e.g. fruit chunks and chocolate bits in foodstuffs. fruit preparations and beverages is that during processing they tend to lose most of their desirable consistency, especially if said processing involves sterilisation, pasteurisation and/or acidification.

Finally, during processing and subsequent storage the desirable taste and colour of chunks of fruit or other water-based food materials is often lost as the flavour and colour components contained therein tend to migrate into the surrounding product matrix.

US 4,507,327 relates to encapsulated foods filled with a desired edible liquid and a process for preparing drinks which include such encapsulated foods. More particularly, this US patent describes a process for preparing edible products in the form of capsules filled with an edible liquid by conducting the following steps:
a. preparing core liquid by adding calcium salt to sugar liquid;
b. forming membranes of mainly calcium alginate on the surface of the core liquid by dropping the core liquid into alginic acid salt liquid and thereby surrounding the core liquid with these membranes to form capsules;
c. exchanging the core liquid in the capsules with water by soaking the capsules of the core liquid in water to remove therefrom any unreacted calcium salt;
d. exchanging the core liquid in the capsules with an edible liquid by immersing the water-filled capsules in the edible liquid.

US-B-6 436 461 discloses a process for preparing beads as food additives, comprising the steps of:
forming discrete droplets of a water-immiscible lipophilic material and an acid polysaccharide in an aqueous medium,
converting the droplets to water-insoluble gel beads having a homogeneous composition and texture from inside to outside by introducing the droplets into a solution containing multivalent cations, thereby building a suspension of gel beads,
isolating the gel beads from the suspension, and
loading the isolated beads with at least one active ingredient.

### SUMMARY OF THE INVENTION

The present inventors have developed a pourable composition that can advantageously be used to introduce discrete chunks of tasty material into foodstuffs, fruit preparations and beverages. The pourable composition according to the present invention comprises a plurality of tasty gelled beads dispersed in a continuous aqueous phase, said gelled beads exhibiting a volume weighted average diameter in the range of 1-15 mm. The gelled beads contain flavouring, water, an anionic gelling polysaccharide and one or more divalent metal ions in an amount sufficient to cause the anionic gelling polysaccharide to form a gel.

The pourable composition according to the present invention can be prepared easily and economically. Furthermore, due to its pourable nature, the composition is easy to dose. Another important advantage of the pourable composition is that the gelled beads contained therein retain their chunky nature even when subjected to sterilisation, pasteurisation and/or acidification. Furthermore, these gelled beads exhibit the ability to retain the flavouring contained therein during food processing and subsequent storage. Thus, upon consumption of foodstuffs and beverages containing the present composition, the gelled beads are clearly perceptible as discrete chunky bits that have a taste of their own.

The pourable composition of the present invention can advantageously be used in manufacture of foodstuffs and beverages, especially in the manufacture of desserts, ice cream, bakery products and dairy products. The present composition is also particularly suitable for incorporation in fruit preparations.

The inventors have developed an uncomplicated process for the manufacture of tasty gelled beads comprising:
- providing a feed consisting of an aqueous liquid containing anionic gelling polysaccharide, sugars and flavouring;
- providing a bath of gelling liquid containing one or more divalent metal ions, said gelling liquid exhibiting a Brix level that is similar to that of the feed;
- introducing discrete amounts of the feed into the bath;
- allowing the introduced discrete amount to form gelled beads within the bath; and collecting the gelled beads.

### DETAILED DESCRIPTION OF THE INVENTION

Accordingly, one aspect of the invention concerns a pourable water-continuous composition comprising a plurality of tasty gelled beads dispersed in a continuous aqueous phase, said gelled beads exhibiting a volume weighted average diameter in the range of 1-15 mm, preferably in the range of 2-10 mm, more preferably in the range of 3-8 mm and containing:
- 0.3-10 wt.%, preferably 0.5-4 wt.% of anionic gelling polysaccharide selected from the group consisting of pectin, alginate and mixtures thereof;
- 0.5-10 mmole of one or more divalent metal ions per g of anionic gelling polysaccharide;
- flavouring; and
- 20-80 wt.% of water;
wherein the gelled beads represent at least 5 wt.%, the continuous aqueous phase at least 10 wt.% and the combination of continuous aqueous phase and gelled beads represents at least 70 wt.% of the composition.

The gelled beads have a homogeneous composition and texture, as contrasted to the capsules described in above mentioned patent publication US 4,507,327. In other words, the gelled beads contained in the present composition do not take the form of capsules filled with an edible liquid.

Stability (flavour retention), texture and taste of the present gelled beads benefit from the presence of a significant amount of sugars. Accordingly, the gelled beads contain 5-70 wt.%, more preferably 10-60 wt.% of sugars selected from the group consisting of monosaccharides, disaccharides, trisaccharides, tetrasaccharides and mixtures thereof. The continuous aqueous phase contains these aforementioned sugars at a level that is within these same concentration ranges.

The term "pourable" as used herein refers to the ability of the present composition to flow. Thus, the present composition is easy-to-dose under the influence of gravity.

In a preferred embodiment of the invention the gelled beads are essentially spherical. A round shape allows the gelled beads to roll and thus enhances the flowing behaviour of the present composition.

The gelled beads in the present compositions may suitably contain a wide variety of flavourings, e.g. fruit flavours, meat flavours, cheese flavours, chocolate flavours, caramel flavours as well as spices , herbs, spice flavourings or herb flavourings. Preferably, the present invention employs flavourings imparting a flavour selected from fruit, chocolate, cinnamon, caramel and mint. In case of fruit flavourings the colour of the gelled beads preferably corresponds to the nature of the fruit, i.e. red colour for red fruit (e.g. strawberry, raspberry); yellow colour for yellow fruit (e.g. lemon, grapefruit, apple); orange colour for orange fruit (e.g. orange, carrot); purple colour for purple fruit (e.g. blue grapes, blueberries) and green colour for green fruit (e.g. green apple, kiwi).

The gelled beads in the present composition may suitably contain added fibres as these can be used to further enhance the stability of the gelled beads in terms of their flavour retention capability. Examples of fibres that can advantageously be incorporated in the present composition include inuline, fructo-oligosaccharides, oligofructose and combinations thereof.

The benefits of the present invention are particularly appreciated when the present pourable composition contains tasty gelled beads that are reminiscent of fruit chunks. Thus, the flavouring contained in the gelled beads preferably is a fruit flavouring. Furthermore, the gelled beads advantageously contain fruit material in an amount, expressed as fruit equivalents, of at least 0.5%, preferably of at least 2%. Here the term "fruit equivalents" refers to the amount of fruit needed to produce the amount of fruit material present in the gelled beads.

The pourable composition according to the invention preferably comprises gelled beads containing at least 10 mg/kg of an additive selected from the group consisting of flavourings and colourings. It is highly preferred that within the present pourable composition the aforementioned additive is concentrated within the gelled beads so as to ensure that when the composition is applied in a foodstuff or a beverage, the gelled beads have a taste and/or colour that is clearly distinguishable from the surrounding product matrix.

An important advantage of the pourable composition of the present invention resides in the very low rate at which flavouring and/or colouring migrate out of the gelled beads. Consequently, in a particularly preferred embodiment of the present composition the additive is present in the gelled beads in a concentration that exceeds the concentration in the continuous aqueous phase by at least a factor 2, preferably by at least a factor 3 and wherein said concentration gradient decreases by not more than 30% when the product is stored at 7 °C for 1 week. A particularly low rate of migration can be achieved by employing a flavouring and./or colouring that largely consists of lipophilic components (e.g. components having an oil:water distribution coefficient of more than 10.

The pH of the continuous aqueous phase of present pourable composition typically is within the range of 2.0 to7.0. Preferably the pH of the continuous aqueous phase is within the range of 3.0 to 5.5. The pH of the aqueous phase is advantageously adjusted by addition of a foodgrade acidulant, e.g. an acidulant selected from the group consisting of lactic acid, citric acid, sorbic acid, hydrochloric acid, phosphoric acid, sodium citrate, sodium phosphates and combinations thereof.

The anionic gelling polysaccharide in the gelled beads preferably is pectin, more preferably low methoxy pectin. The divalent metal ion in the gelled beads is suitably selected from the group consisting of calcium, magnesium and combinations thereof. Most preferably, the divalent metal ion is calcium. Calcium ions are suitably incorporated in the present composition in the form of calcium lactate, calcium chloride, calciumlactate gluconate or combinations of these salts.

The gelled beads preferably represent at least 10 wt.%, more preferably at least 30 wt.% and most preferably at least 40 wt.% of the pourable composition. The continuous aqueous phase suitably represents at least 15 wt.% of the pourable composition. Even more preferably, the continuous phase represents at least 20 wt.%, most preferably 25-60 wt.% of the pourable composition. The combination of the gelled beads and the continuous aqueous phase preferably represents at least 80 wt.%, even more preferably at least 90 wt.% of the present composition. Most preferably, the combination of the gelled beads and the continuous phase constitute 100% of the pourable composition.

In yet another preferred embodiment the continuous aqueous phase of the present composition contains at least 0.02 wt.%, of a thickening agent to increase the viscosity of the aqueous phase. Typically, the thickened aqueous phase exhibits a viscosity of at least 30 mPa.s., preferably of at least 50 mPa.s, more preferably of at least 80 mPa.s and most preferably of at least 200 mPa.s. The aforementioned viscosities are suitably determined at a temperature of 23 °C using a Thermo Haake™ viscometer operated at CR lin 0.13 1/s - 400 1/s, time is 30sec., 100 measurements, using a beaker: MV DIN B (222-1251) and a rotor: MV DIN B rotor (222-1252). The incorporation of a thickening agent to increase the viscosity of the continuous aqueous phase ensures that the flowing behaviour of the composition will resemble that of a syrup rather than a liquid. Thus, dosability of the pourable composition can be further improved. Examples of thickening agent that may suitably be employed include: xanthan gum, guar gum, locust bean gum, gellan gum, starch, carboxymethyl cellulose, modified cellulose (e.g. cellulose ethers), microcrystalline cellulose, carrageenan and combinations thereof.

The appearance of the present composition is strongly affected by the translucency of the continuous aqueous phase. Preferably, said continuous phase is sufficiently translucent to distinguish individual the gelled beads within the pourable composition. Even, more preferably, the continuous phase is essentially transparent. Most preferably, the continuous phase is transparent and essentially colourless.

As explained herein before, the gelled beads within the present composition are able to withstand pasteurisation and even sterilisation, baking and freezing. Consequently, also the present composition can be pasteurised or sterilised without significant adverse effects on the product properties. An advantageous embodiment of the invention therefore relates to the present composition that has been pasteurised or sterilised. Most preferably, the composition has been pasteurised.

The pourable composition as defined above is used as an ingredient in the manufacture of a product selected from a foodstuff, a fruit preparation or a beverage. The process of manufacturing such a product, comprises the incorporation into the product of a pourable composition as defined herein before. Typically, the aforementioned use and process involve incorporation of the pourable composition in the product in a concentration of 1-40 wt.%. Examples of foodstuffs and beverages in which the present composition may be applied advantageously include desserts, ice cream, bakery products and dairy products, desserts, ice cream and bakery products being particularly preferred. It is an essential aspect of the invention that the pourable compositions is incorporated using processing conditions that leave the gelled beads essentially intact so as to ensure that the gelled beads remain intact in the final product.

The present composition is particularly suitable for incorporation in fruit preparations. Fruit preparations are commonly used in foodstuffs and beverage to introduce fruit taste and/or fruit pieces or fruit chunks. The incorporation of the flavoured gelled beads offers the advantage that it enables effective reinforcement of the fruit taste of the preparation. Alternatively, the gelled beads may be used to impart flavour characteristics that are complementary to the taste of the fruit preparation base (e.g. cinnamon, caramel or mint). Accordingly, another aspect of the invention concerns a fruit preparation obtainable by incorporating therein a pourable composition according to the present invention, said fruit preparation containing at least 2 wt.%, preferably at least 5 wt.% of the gelled beads.

Yet another aspect of the present invention concerns a process for the manufacture of the pourable composition, comprising:
- providing a feed consisting of an aqueous liquid, said liquid containing 0.3-10 wt.% anionic gelling polysaccharide selected from the group consisting of pectin, alginate and mixtures thereof and flavouring; and 5-70 wt.% of sugars selected from the group consisting of monosaccharides, disaccharides, trisaccharides, tetrasaccharides and mixtures thereof;
- providing a bath of gelling liquid, said gelling liquid containing at least 0.5 mM of one or more divalent metal ions;
- introducing discrete amounts of between 10 mg and 1500 mg of the feed into the bath;
- allowing the introduced discrete amount to form gelled beads within the bath; and
- collecting the gelled beads;

By ensuring that the Brix level of the feed and the gelling liquid are comparable, fluctuations in product quality can be minimised. Pronounced differences in Brix levels may cause undesired migration of components from the feed into the gelling liquid. Both the feed and the gelling liquid contain 5-70 wt.%, preferably 10-60 wt.% of sugars selected from the group consisting of monosaccharides, disaccharides, trisaccharides, tetrasaccharides and mixtures thereof.

The density of the feed and gelling liquid preferably are sufficiently different to ensure that the gelled beads that materialise within the bath will either float or sink to the bottom. In a particularly preferred embodiment the density of the feed is at least 1% higher than the density of the bath and the gelled beads are collected from the bottom of the batch.

The gelled beads may be separated from the gelling liquid prior to collection e.g. by draining off the gelling liquid. Alternatively, the gelled beads may be collected together with at least a fraction of the gelling liquid. Preferably, the gelled beads are collected from the bath together with gelling liquid, said gelling liquid providing a continuous aqueous phase that envelops the gelled beads and that represents 20-200% by weight of the gelled beads, followed by packaging the combination of gelled beads and continuous aqueous phase in a sealed container.

In a preferred embodiment of the present process at least 0.02 wt.% of thickening agent is added to the continuous aqueous phase following the collection and prior to the packaging to increase the viscosity of the continuous aqueous phase to at least 30 mPa.s, more preferably to at least 200 mPa.s.

In order to enhance the shelf-life of the product obtained from the present process the collected gelled beads are advantageously pasteurised or sterilised followed by aseptically packaging the pasteurised/sterilised gelled beads in a container.

### EXAMPLES

### Example 1

A liquid feed composition was prepared from the following ingredients:

| | % by weight |
|---|---|
| Inuline | 27 |
| Sodium citrate | 1 |
| Orange juice concentrate 65°Brix | 0.25 |
| Citric acid 46.3wt.% | 1 |
| Low methylesther pectins (E440), DE 31-39% | 2 |
| Sucrose | 22 |
| Flavouring (natural orange-flavour) and colouring (E160a) | 1.25 |
| Water | 45.5 |

In addition, a gelling liquid composition was prepared from the following ingredients:

| | % by weight |
|---|---|
| Glucose-fructose syrup | 50 |
| Ca-lactate | 3 |
| Citric acid 46.3wt% | 0.3 |
| Water | 46.7 |

Furthermore, a thickening composition was prepared from the following ingredients:

| | % by weight |
|---|---|
| Modified Starch E1422 | 25.7 |
| Water | 74.3 |

### Preparation of the liquid feed composition:

An aqueous solution A was prepared by first dissolving sodium citrate and inuline in 400 g of water of 60 °C under stirring. Next, also under stirring, the fruit concentrate, acidulant and emulsifier are added and the temperature of the aqueous liquid is raised to the boiling point. A pre-blended mixture of the pectin and sugars is added to the liquid and the resulting mixture is kept at boiling temperature, under stirring, for 3 more minutes before being cooled down to 60 °C. Finally, the flavouring and colouring were added.(the colouring was dissolved in 55g warm water)

### Preparation of the gelling liquid:

The gelling liquid was prepared by adding the calcium salt and the acidulant to water and heating to 60 °C under stirring. Next, the other ingredients are added and dissolved at a temperature of 60 °C.

### Preparation of the gelled beads:

1000 g of the gelling liquid was transferred into a bath (3.51 container) and kept at a temperature of 60 °C. Subsequently, the liquid feed (60 °C) was fed to a series of pipettes positioned above the bath of gelling liquid. A constant flow (100 ml/min.) of droplets of feed liquid with a diameter of about 4 mm was dripped into the gelling liquid, which liquid was continuously stirred. Gelation of these droplets into gelled beads commenced as soon as they entered the gelling liquid. Whilst gelation proceeded, the gelling beads slowly sank to the bottom of the bath. After 10 minutes the dripping of feed liquid was discontinued.

### Addition of thickening composition and packaging

The gelled beads were removed from the bath together with a part of the gelling liquid (ratio of gelled beads : continuous aqueous phase = 70:26.5). Next, the thickening composition was added (3.5% by weight of the total composition) under stirring and the resulting mixture was pasteurised, cooled and aseptically packaged.

### Example 2

The pourable gelled beads containing aqueous phase described in Example 1 was applied in yoghurt.

### Ingredients:

800 g yoghurt
200g pourable gelled beads containing composition in a continuous aqueous phase

The yoghurt and pourable composition were mixed to obtain a homogeneous dispersion. The resulting product was stored in a refrigerator at ±7 C°.

After 2 weeks of storage, the product properties were found to be essentially identical to those of the freshly prepared product. More particularly, it was found that no perceptible colour or flavour migration out of the gelled beads into the yoghurt had occurred.

### Example 3

The pourable gelled beads containing aqueous phase described in Example 1 was applied in cream cake.

| Ingredients: | |
|---|---|
| 1100 g | 07116 Meistermix Vario Amerikaner (Bake Mark™) |
| 10g | salt |
| 750g | whipped cream |
| 500g | whole egg |
| 675g | pourable gelled beads in a continuous aqueous phase |

All ingredients were mixed to obtain a homogeneous batter. The batter was transferred into a cake tin. The cake tin was placed in an oven that had been pre-heated to 210°C and was baked for 30 minutes. The cake tin was removed from the oven, and allowed to cool for 10 minutes before the cake was taken out of the tin.

After 2 weeks of storage at -10°C (in a sealed plastic bag), the product properties were found to be essentially identical to those of the freshly prepared product. Again, it was found that no perceptible colour or flavour migration out of the gelled beads had occurred.

## Claims

1. A pourable water-continuous composition comprising a plurality of tasty gelled beads dispersed in a continuous aqueous phase, said continuous aqueous phase containing 5-70 wt.% of sugars selected from the group consisting of monosaccharides, disaccharides, trisaccharides, tetrasaccharides and mixtures thereof, said gelled beads exhibiting a volume weighted average diameter in the range of 1-15 mm and containing:
• 0.3-10 wt.%, preferably 0.5-8 wt.% of anionic gelling polysaccharide selected from the group consisting of pectin, alginate and mixtures thereof;
• 0.5-10 mmole of one or more divalent metal ions per g of anionic gelling polysaccharide;
• 5-70 wt.% of sugars selected from the group consisting of monosaccharides, disaccharides, trisaccharides, tetrasaccharides and mixtures thereof;
• flavouring; and
• 20-80 wt.% of water;
wherein the gelled beads represent at least 5 wt.%, the continuous aqueous phase at least 10 wt.% and the combination of continuous aqueous phase and gelled beads represents at least 70 wt.% of the composition and wherein the gelled beads have a homogeneous composition and texture.

2. Pourable composition according to claim 1, wherein the continuous aqueous phase of the present composition contains a thickening agent and the thickened aqueous phase exhibits a viscosity of at least 30 mPa.s.

3. Pourable composition according to claim 1 or 2, wherein the gelled beads contain 1-70 wt.%, preferably 5-60 wt.% of sweetener.

4. Pourable composition according to any one of the preceding claims, wherein the anionic gelling polysaccharide is pectin, preferably low methoxy pectin.

5. Pourable composition according to any one of the preceding claims, wherein the gelled beads represent at least 10 wt.% of the composition; the continuous aqueous phase represents at least 15 wt.% of the composition; the combination of the gelled beads and the continuous aqueous phase represents at least 80 wt.% of the composition.

6. Process of manufacturing a product selected from a foodstuff, a fruit preparation or a beverage, said process comprising the incorporation into the product of a pourable composition according to any one of claims 1-5.

7. Process according to claim 6, wherein the pourable composition is incorporated in the product in a concentration of 1-40 wt.%.

8. Process according to claim 6 or 7, wherein the product is a fruit preparation, a bakery product, a dessert or ice cream.

9. A fruit preparation obtainable by incorporating therein a pourable composition according to any one of claims 1-5, said fruit preparation containing at least 2 wt.%, preferably at least 5 wt.% of the gelled beads.

10. Process for the manufacture of a pourable composition according to any one of claims 1-5, said process comprising:
• providing a feed consisting of an aqueous liquid, said liquid containing 0.3-10 wt.% anionic gelling polysaccharide selected from the group consisting of pectin, alginate and mixtures thereof and flavouring; and 5-70 wt.% of sugars selected from the group consisting of monosaccharides, disaccharides, trisaccharides, tetrasaccharides and mixtures thereof;
• providing a bath of gelling liquid, said gelling liquid containing at least 0.5 mM of one or more divalent metal ions;
• introducing discrete amounts of between 10 and 1500 mg of the feed into the bath;
• allowing the introduced discrete amount to form gelled beads within the bath; and
• collecting the gelled beads.

11. Process according to claim 10, wherein the density of the feed is at least 1% higher than the density of the bath and the gelled beads are collected from the bottom of the batch.

12. Process according to claims 10 or 11, wherein the gelled beads are collected from the bath together with gelling liquid, said gelling liquid providing a continuous aqueous phase that envelops the gelled beads and that represents 20-200% by weight of the gelled beads, followed by packaging the combination of gelled beads and continuous aqueous phase in a sealed container.

## Patentansprüche

1. Giessbare Wasser-kontinuierliche Zusammensetzung, welche eine Mehrzahl schmackhafter, gelierter Kügelchen in einer kontinuierlichen wässrigen Phase enthält, wobei die kontinuierliche wässrige Phase 5 bis 70 Gewichtsprozentanteil von Zucker enthält, welcher aus der Gruppe ausgewählt ist, welche Monosaccharide, Disaccharide, Trisaccharide, Tetrasaccharide und Mischungen daraus enthält, wobei die gelierten Kügelchen einen Volumengewichts-Mitteldurchmesser im Bereich von 1 bis 15 Millimeter haben und enthalten:
0,3 bis 10 Gewichtsprozentanteil, vorzugsweise 0,5 bis 8 Gewichtsprozentanteil, von anionischen Gelierungs-Polysaccharid, welches aus der Gruppe ausgewählt ist, welche Pektin, Alginat und Mischungen daraus enthält;
0,5 bis 10 Millimol von einem oder mehreren zweiwertigen Metallionen pro Gramm von anionischen Gelierungs-Polysaccarid;
5 bis 70 Gewichtsprozentanteil von Zucker, welcher aus der Gruppe ausgewählt ist, welche Monosaccharide, Disaccharide, Trisaccharide, Tetrasaccharide und Mischungen daraus enthält;
Aromastoff; und
20 bis 80 Gewichtsprozentanteil von Wasser;
wobei die gelierten Kügelchen zumindest 5 Gewichtsprozentanteil, die kontinuierliche wässrige Phase zumindest 10 Gewichtsprozentanteil und die Zusammensetzung aus der kontinuierlichen wässrigen Phase und den gelierten Kügelchen zumindest 70 Gewichtsprozentanteil der Zusammensetzung darlegen, und wobei die gelierten Kügelchen eine homogene Zusammensetzung und Konsistenz haben.

2. Giessbare Zusammensetzung nach Anspruch 1, bei welcher die kontinuierliche wässrige Phase von der vorliegenden Zusammensetzung ein Verdickungsmittel enthält und die verdickte wässrige Phase eine Viskosität von zumindest 30 mPa*s darlegt.

3. Giessbare Zusammensetzung nach Anspruch 1 oder 2, bei welcher die gelierten Kügelchen 1 bis 70 Gewichtsprozentanteil, vorzugsweise 5 bis 60 Gewichtsprozentanteil, von Süßstoff enthalten.

4. Giessbare Zusammensetzung nach einem der vorhergehenden Ansprüche, bei welcher das anionische Gelierungs-Polysaccharid ein Pektin, vorzugsweise ein Niedrig-Methoxyl-Pektin, ist.

5. Giessbare Zusammensetzung nach einem der vorhergehenden Ansprüche, bei welcher die gelierten Kügelchen zumindest 10 Gewichtsprozentanteil der Zusammensetzung darlegen, die kontinuierliche wässrige Phase zumindest 15 Gewichtsprozentanteil der Zusammensetzung darlegt, die Zusammensetzung aus den gelierten Kügelchen und der kontinuierlichen wässrigen Phase zumindest 80 Gewichtsprozentanteil der Zusammensetzung darlegt.

6. Verfahren zum Herstellen eines Produktes, welches aus einem Nahrungsmittel, einer Frucht-Aufbereitung oder einem Getränk ausgewählt ist, wobei das Verfahren die Beimischung einer giessbaren Zusammensetzung nach einem der Ansprüche 1 bis 5 in das Produkt enthält.

7. Verfahren nach Anspruch 6, bei welchem die giessbare Zusammensetzung bei einer Konzentration von 1 bis 40 Gewichtsprozentanteil in das Produkt beigemischt wird.

8. Verfahren nach Anspruch 6 oder 7, bei welchem das Produkt eine Frucht-Aufbereitung, ein Backprodukt, ein Dessert oder ein Speiseeis ist.

9. Frucht-Aufbereitung, welche durch ein Beimischen einer giessbaren Zusammensetzung nach einem der Ansprüche 1 bis 5 darin erlangbar ist, wobei die Frucht-Aufbereitung zumindest 2 Gewichtsprozentanteil, vorzugsweise zumindest 5 Gewichtsprozentanteil, der gelierten Kügelchen enthält.

10. Verfahren zum Herstellen einer giessbaren Zusammensetzung nach einem der Ansprüche 1 bis 5, wobei das Verfahren enthält:
Bereitstellen einer Eingabe, welche eine wässrige Flüssigkeit enthält, wobei die Flüssigkeit 0,3 bis 10 Gewichtsprozentanteil von einem anionischen Gelierungs-Polysaccharid, welches aus der Gruppe ausgewählt ist, welche Pektin, Alginat und Mischungen daraus enthält, und einen
Aromastoff; und 5 bis 70 Gewichtsprozentanteil von Zucker, welcher aus der Gruppe ausgewählt ist, welche Monosaccharide, Disaccharide, Trisaccharide, Tetrasaccharide und Mischungen daraus enthält, enthält;
Bereitstellen eines Bades aus einer Gelierungs-Flüssigkeit, wobei die Gelierungs-Flüssigkeit zumindest 0,5 Millimol von einem oder mehreren zweiwertigen Metallionen enthält;
Beimischen von diskreten Mengen zwischen 10 und 1500 mg der Eingabe in das Bad;
Ermöglichen, dass die beigemischte diskrete Menge innerhalb des Bades gelierte Kügelchen ausbildet; und
Einsammeln der gelierten Kügelchen.

11. Verfahren nach Anspruch 10, bei welchem die Dichte der Eingabe zumindest 1 % höher als die Dichte des Bades ist und die gelierten Kügelchen vom Bodenbereich von der Masse eingesammelt werden.

12. Verfahren nach Anspruch 10 oder 11, bei welchem die gelierten Kügelchen vom Bad zusammen mit Gelierungs-Flüssigkeit eingesammelt werden, wobei die Gelierungs-Flüssigkeit eine kontinuierliche wässrige Phase bereitstellt, welche die gelierten Kügelchen einhüllt und welche 20 bis 200 Gewichtsprozentanteil der gelierten Kügelchen darlegt, gefolgt durch ein Paketieren der Zusammensetzung aus gelierten Kügelchen und der wässrigen Phase in einem abgedichteten Behälter.

## Revendications

1. Composition coulable à phase aqueuse continue comprenant un ensemble de billes gélifiées savoureuses dispersées dans une phase aqueuse continue, cette phase aqueuse continue renfermant 5-70 % en poids de sucres choisis dans le groupe formé par les monosaccharides, les disaccharides, les trisaccharides, les tétrasaccharides et leurs mélanges, ces billes gélifiées ayant un diamètre moyen pondéré en volume dans la plage de 1-15 mm et renfermant :
- 0,3-10 % en poids, de préférence 0,5-8 % en poids de polysaccharide anionique gélifiant choisi dans le groupe formé par les pectines, les alginates et leurs mélanges,
- 0,5-10 mmoles d'au moins un ion métallique divalent par g de polysaccharide anionique gélifiant,
- 5-70 % en poids de sucres choisis dans le groupe formé par les monosaccharides, les disaccharides, les trisaccharides, les tétrasaccharides et leurs mélanges,
- des arômes, et
- 20-80 % en poids d'eau,
étant précisé que les billes gélifiées représentent au moins 5 % en poids, la phase aqueuse continue, représente au moins 10 % en poids et la combinaison de la phase aqueuse continue et des billes gélifiées représente au moins 70 % en poids de la composition, et que les billes gélifiées ont une composition et une texture homogène.

2. Composition coulable selon la revendication 1,
dans laquelle
la phase aqueuse continue contient un agent épaississant, et la phase aqueuse épaissie présente une viscosité d'au moins 30 mPa.s.

3. Composition coulable selon la revendication 1 ou 2,
dans laquelle
les billes gélifiées renferment 1-70 % en poids, de préférence 5-60 % en poids d'agent édulcorant.

4. Composition coulable selon l'une quelconque des revendications précédentes,
dans laquelle
le polysaccharide anionique gélifiant est une pectine, de préférence une pectine faiblement méthoxylée.

5. Composition coulable selon l'une quelconque des revendications précédentes,
dans laquelle
les billes gélifiées représentent au moins 10 % en poids de la composition, la phase aqueuse continue représente au moins 15 % en poids de la composition, et la combinaison des billes gélifiées et de la phase aqueuse continue représente au moins 80 % en poids de la composition.

6. Procédé d'obtention d'un produit choisi parmi un aliment, une préparation à base de fruits ou une boisson, ce procédé comprenant une étape d'incorporation dans le produit d'une composition coulable selon l'une quelconque des revendications 1-5.

7. Procédé conforme à la revendication 6,
selon lequel
la composition coulable est incorporée dans le produit selon une concentration de 1-40 % en poids.

8. Procédé conforme à la revendication 7 ou 8,
selon lequel
le produit est une préparation à base de fruits, un produit de boulangerie, un dessert ou une crème glacée.

9. Préparation à base de fruits pouvant être obtenue en incorporant dans celle-ci une composition coulable selon l'une quelconque des revendications 1-5, cette préparation à base de fruits renfermant au moins 2 % en poids, de préférence au moins 5 % en poids de billes gélifiées.

10. Procédé d'obtention d'une composition coulable conforme à l'une quelconque des revendications 1-5, ce procédé comportant les étapes consistant à :
- se procurer un aliment consistant en un liquide aqueux, ce liquide renfermant 0,3-10 % en poids de polysaccharide anionique gélifiant choisi dans le groupe formé par les pectines, les alginates et leurs mélanges ainsi qu'un arôme, et 5-70 % en poids de sucres choisi dans le groupe formé par les monosaccharides, les disaccharides, les trisaccharides, les tétrasaccharides et leurs mélanges,
- se procurer un bain de liquide gélifiant, ce liquide gélifiant renfermant au moins 0,5 mM d'au moins un ion métallique divalent,
- introduire des quantités discrètes comprises entre 10 et 1500 mg de l'aliment dans le bain,
- former des billes gélifiées dans le bain, à partir des quantités discrètes introduites et
- recueillir les billes gélifiées.

11. Procédé conforme à la revendication 10,
selon lequel
la densité de l'aliment est supérieure d'au moins 1 % à la densité du bain et les billes gélifiées sont recueillies au fond du bain.

12. Procédé conforme à la revendication 10 ou 11,
selon lequel
on recueille les billes gélifiées dans le bain avec du liquide gélifiant, ce liquide gélifiant donnant une phase aqueuse continue qui enveloppe les billes gélifiées et qui représente 20-200 % en poids des billes gélifiées, puis on conditionne la combinaison de billes gélifiées et de la phase aqueuse continue dans un récipient fermé hermétiquement.
